# EUROPEAN PATENT APPLICATION

(11) **EP 4 742 639 A1**
(43) Date of publication of application: **13.05.2026**
(21) Application number: 24852026.4
(22) Date of filing: 11.06.2024
(51) Int. Cl.: H04M 1/02, H01Q 1/24

(54) **ELECTRONIC DEVICE COMPRISING CONDUCTIVE PATTERN AND ADHESIVE MEMBER**

(30) Priority: 07.08.2023 KR 20230103111; 27.09.2023 KR 20230130312
(71) Applicant: Samsung Electronics Co., Ltd., Suwon-si, Gyeonggi-do 16677 (KR)
(72) Inventor: CHO, Kyonghwan, Suwon-si, Gyeonggi-do 16677 (KR); KWON, Eunbae, Suwon-si, Gyeonggi-do 16677 (KR); KIM, Jongmin, Suwon-si, Gyeonggi-do 16677 (KR); NA, Hyoseok, Suwon-si, Gyeonggi-do 16677 (KR); MOCK, Jina, Suwon-si, Gyeonggi-do 16677 (KR); LEE, Jaehyung, Suwon-si, Gyeonggi-do 16677 (KR); JU, Wanjae, Suwon-si, Gyeonggi-do 16677 (KR)
(74) Representative: HGF
(86) International application number: PCT/KR2024/007922
(87) International publication number: WO 2025/033668

(57) **Abstract**

An electronic device according to various embodiments of the present invention comprises: a housing, which includes a front plate, a rear plate, and a side member constituting an outer sidewall of the electronic device; a first support member, which forms one body with the side member and comprises a first surface and a second surface and which has a fastening hole formed in a corner area of the first support member and an opening formed adjacent to the fastening hole; an adhesive member, which is disposed in a first area on the second surface of the first support member and partially surrounds the fastening hole; and a conductive pattern, which extends from the second surface of the first support member to the first surface through the opening, wherein a portion of the conductive pattern is disposed in a second area on the second surface of the first support member so as to partially surround the fastening hole, and the conductive pattern may be arranged so as not to overlap the adhesive member in the first area between the fastening hole and the corner of the side member.

## Description

### [Technical Field]

Various embodiments of the disclosure disclose an electronic device including a conductive pattern and an adhesive member.

### [Background Art]

The use of electronic devices such as bar-type, foldable-type, rollable-type, or sliding-type smartphones or tablet PCs is increasing, and various functions are being provided to the electronic devices.

The electronic device may transmit and receive phone calls and various data with other electronic devices through wireless communication.

The electronic devices may include at least one antenna (e.g., an antenna radiator) in order to perform wireless communication with another electronic device by using a network.

### [Disclosure of Invention]

### [Technical Problem]

An electronic device may include a side surface member (e.g., a housing) including a support member, and a front surface plate may be disposed in a first direction (e.g., an upper portion) of the side surface member, and a rear surface plate may be disposed in a second direction (e.g., a lower portion) of the side surface member.

For example, among components included in the electronic device, at least a portion of the components (e.g., the front surface plate) may be coupled to the side surface member in the first direction by inserting a screw into a fastening hole formed at a corner of the support member, or through a coupling hook. For example, the rear surface plate may be coupled to the side surface member in the second direction of through an adhesive member.

In the electronic device, an adhesive member (e.g., a double-sided adhesive tape) and a conductive pattern (e.g., an antenna pattern) may be disposed between the fastening hole formed at the corner of the support member and a portion of the side surface member. When the adhesive member and the conductive pattern are disposed together between the fastening hole and the portion of the side surface member, an area of the adhesive member and an area of the conductive pattern may be limited.

For example, when the area of an adhesive member disposed at a corner of the support member is limited, an adhesive force for bonding the side surface member and the rear surface plate may be weakened. For example, when an area of a conductive pattern disposed at a corner of the support member is limited, radiation performance of the conductive pattern operating as an antenna may be deteriorated.

Various embodiments of the disclosure may provide an electronic device capable of expanding an area of an adhesive member and an area of a conductive pattern that are disposed between a side surface member including a support member and a rear surface plate.

The technical problems to be addressed by this disclosure are not limited to those described above, and other technical problems not mentioned above may be clearly understood by a person ordinarily skilled in the related art to which the disclosure pertains.

### [Solution to Problem]

According to an embodiment of the disclosure, an electronic device may include a housing including a front surface plate, a rear surface plate, and a side surface member forming an outer side wall of the electronic device. According to an embodiment, the electronic device may include a first support member that is integrally formed with the side surface member and includes a first surface and a second surface. According to an embodiment, the first support member may include a fastening hole formed in a corner region of the first support member and an opening formed adjacent to the fastening hole. According to an embodiment, the electronic device may include an adhesive member that is disposed in a first region of the second surface of the first support member and partially surrounds the fastening hole. According to an embodiment, the electronic device may include a conductive pattern that extends from the second surface of the first support member to the first surface of the first support member through the opening. According to an embodiment, a portion of the conductive pattern may be disposed in a second region of the second surface of the first support member so as to partially surround the fastening hole. According to an embodiment, the conductive pattern may be formed so as not to overlap with the adhesive member in the first region between the fastening hole and a corner of the side surface member.

### [Advantageous Effects of Invention]

According to various embodiments of the disclosure, by extending areas of an adhesive member (e.g., a double-sided adhesive tape) and a conductive pattern (e.g., an antenna pattern) that are disposed between a side surface member including a support member and a rear surface plate, an adhesive force between the housing and the rear surface plate may be improved, and radiation performance of an antenna may be improved.

In addition, various effects that are directly or indirectly understood through this document may be provided.

### [Brief Description of Drawings]

In connection with the description of the drawings, the same or similar components may be denoted by the same or similar reference numerals.
FIG. 1 is a block diagram of an electronic device in a network environment, according to various embodiments of the disclosure.
FIG. 2A is a front perspective view of an electronic device according to various embodiments of the disclosure.
FIG. 2B is a rear perspective view of the electronic device according to various embodiments of the disclosure.
FIG. 3 is an exploded perspective view schematically illustrating a portion of a configuration of an electronic device according to an embodiment of the disclosure.
FIG. 4 is a view schematically illustrating a second surface in a state in which a portion A of the electronic device illustrated in FIG. 3 according to an embodiment of the disclosure is coupled.
FIG. 5 is a view schematically illustrating a state in which an adhesive member is omitted, in the electronic device illustrated in FIG. 4 according to an embodiment of the disclosure.
FIG. 6 is a view schematically illustrating a first surface in a state in which a portion A of the electronic device illustrated in FIG. 3 according to an embodiment of the disclosure is coupled.
FIG. 7 is a cross-sectional view schematically illustrating a B-B' portion of the electronic device illustrated in FIG. 5 according to an embodiment of the disclosure.
FIG. 8 is a cross-sectional view of the electronic device illustrated in FIG. 5 according to an embodiment of the disclosure, taken along line B-B', schematically illustrating various embodiments of the conductive pattern.
FIG. 9 is a view schematically illustrating an embodiment in which a conductive pattern of an electronic device includes a first extension portion, according to an embodiment of the disclosure.
FIG. 10 is a view schematically illustrating an embodiment in which a conductive pattern of an electronic device includes a second extension portion, according to an embodiment of the disclosure.
FIG. 11 is a view schematically illustrating a conductive pattern including a first conductive extension portion of an electronic device according to an embodiment of the disclosure.
FIG. 12 is a view schematically illustrating a conductive pattern including a first conductive extension portion and a second conductive extension portion of an electronic device according to an embodiment of the disclosure.
FIG. 13 is a view schematically illustrating various embodiments of a conductive pattern of an electronic device according to an embodiment of the disclosure.
FIG. 14 is a view schematically illustrating a part of a configuration of an electronic device according to a first comparative example including an adhesive member and a conductive pattern.
FIG. 15 is a view schematically illustrating a part of a configuration of an electronic device according to a second comparative example including an adhesive member and a conductive pattern.
FIG. 16 is a view schematically illustrating radiation performance of the electronic device according to the embodiment of the disclosure, radiation performance of an electronic device according to the first comparative example, and radiation performance of an electronic device according to the second comparative example.
FIG. 17 is a view schematically illustrating antenna gain of an electronic device according to the embodiment of the disclosure, antenna gain of the electronic device according to the first comparative example, and antenna gain of the electronic device according to the second comparative example.

### [Mode for the Invention]

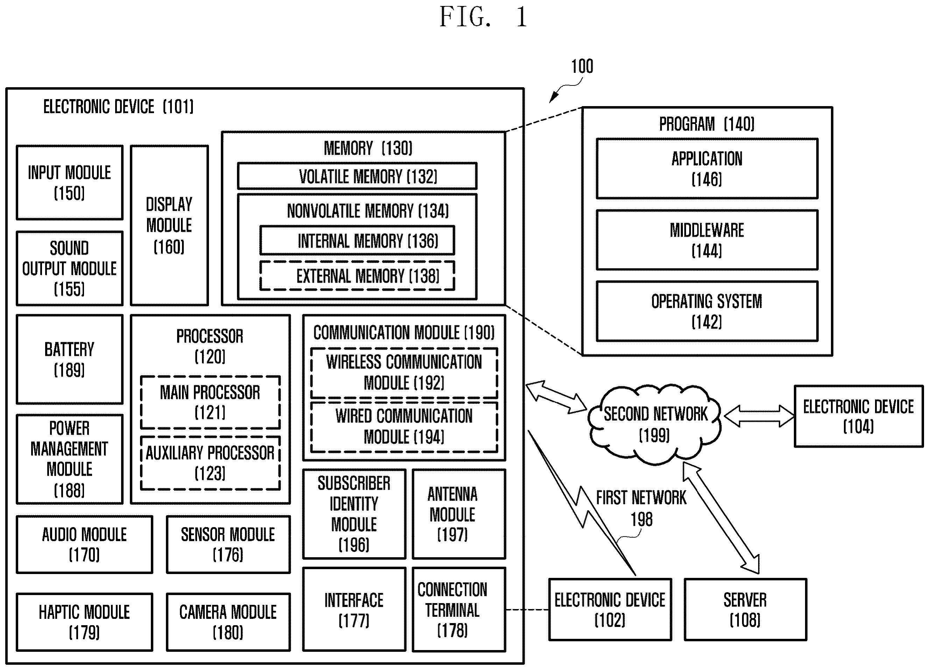

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

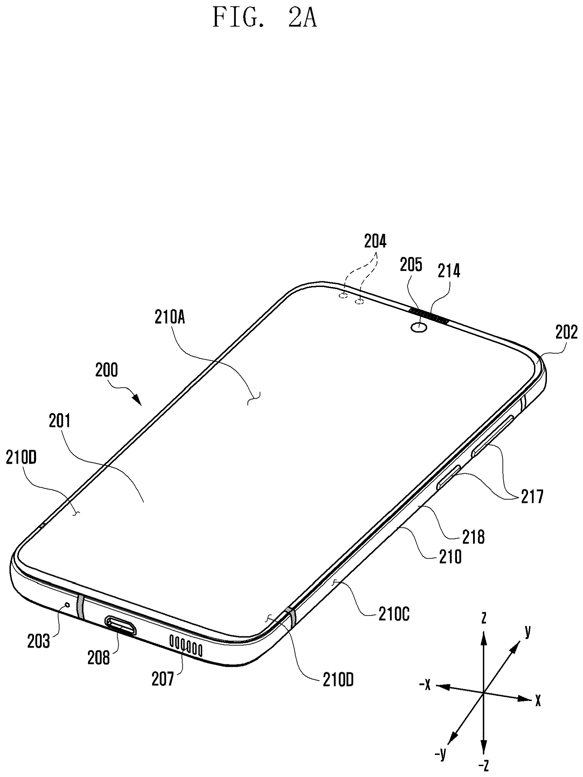

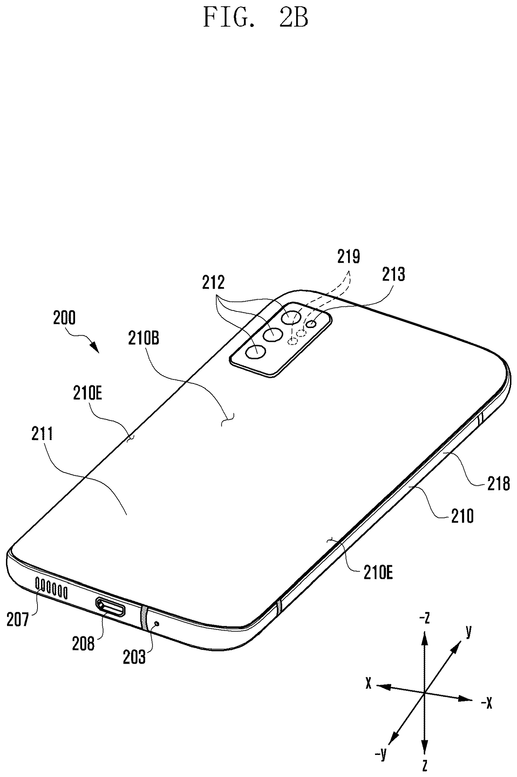

FIG. 2A is a front perspective view of an electronic device according to various embodiments of the disclosure. FIG. 2B is a rear perspective view of the electronic device in FIG. 2A according to various embodiments of the disclosure.

Referring to FIG. 2A and FIG. 2B, an electronic device 200 according to an embodiment may include a housing 210 including a first surface (or front surface) 210A, a second surface (or rear surface) 210B, and a side surface 210C surrounding the space between the first surface 210A and the second surface 210B. In another embodiment (not illustrated), the housing may denote a structure that forms a part of the first surface 210A, the second surface 210B, and the side surface 210C illustrated in FIG. 2A and FIG. 2B. According to an embodiment, the first surface 210A may be formed by a front plate 202, at least a part of which is substantially transparent (for example, a glass plate including various coating layers, or a polymer plate). The second surface 210B may be formed by a rear plate 211 that is substantially opaque. The rear plate 211 may be made of coated or colored glass, ceramic, polymer, metal (for example, aluminum, stainless steel (STS), or magnesium), or a combination of at least two of the above-mentioned materials. The side surface 210C may be formed by a side bezel structure (or "side member") 218 which is coupled to the front plate 202 and to the rear plate 211, and which includes metal and/or polymer. In some embodiments, the rear plate 211 and the side bezel structure 218 may be formed integrally and may include the same material (for example, a metal material such as aluminum).

In the illustrated embodiment, the front plate 202 may include two first areas 210D on both ends of the long edge of the front plate 202 such that the two first areas 210D bend from the first surface 210A toward the rear plate 211 and extend seamlessly. In the illustrated embodiment (see FIG. 2B), the rear plate 211 may include two second areas 210E on both ends of the long edge such that the two second areas 210E bend from the second surface 210B toward the front plate 202 and extend seamlessly. In some embodiments, the front plate 202 (or the rear plate 211) may include only one of the first areas 210D (or the second areas 210E). In another embodiment, a part of the first areas 210D or the second areas 210E may not be included. In the above embodiments, when seen from the side surface of the electronic device 200, the side bezel structure 218 may have a first thickness (or width) on a part of the side surface, which does not include the first areas 210D or the second areas 210E as described above, and may have a second thickness that is smaller than the first thickness on a part of the side surface, which includes the first areas 210D or the second areas 210E.

According to an embodiment, the electronic device 200 may include at least one of a display 201, an input module 203, sound output modules 207 and 214, sensor modules 204 and 219, camera modules 205, 212, and 213, a key input device 217, an indicator, and a connector 208. In some embodiments, at least one of the constituent elements (for example, the key input device 217 or the indicator) of the electronic device 200 may be omitted, or the electronic device 200 may additionally include another constituent element.

The display 201 may be exposed through a corresponding part of the front plate 202, for example. In some embodiments, at least a part of the display 201 may be exposed through the front plate 202 that forms the first areas 210D of the side surface 210C and the first surface 210A. In some embodiments, the display 201 may have a corner formed in substantially the same shape as that of the adjacent outer periphery of the front plate 202. In another embodiment (not illustrated), in order to increase the area of exposure of the display 201, the interval between the outer periphery of the display 201 and the outer periphery of the front plate 202 may be formed to be substantially identical.

The input module 203 may include a microphone. The input module 203 may include a plurality of microphones arranged therein such that the direction of a sound can be sensed in some embodiments. The sound output modules 207 and 214 may include an speakers 207 and 214. In some embodiments, the speakers 207 and 214 and the microphone 203 may be implemented as a single hole, or a speaker may be included (for example, a piezoelectric speaker) without the speakers 207 and 214.

The sensor modules 204 and 219 may generate an electric signal or a data value corresponding to the internal operating condition of the electronic device 200 or the external environment condition thereof. The sensor modules 204 and 219 may include, for example, a first sensor module 204 (for example, a proximity sensor) arranged on the first surface 210A of the housing 210, and/or a second sensor module (not illustrated) (for example, a fingerprint sensor), and/or a third sensor module 219 (for example, an HRM sensor) arranged on the second surface 210B of the housing 210, and/or a fourth sensor module (for example, a fingerprint sensor). The fingerprint sensor may be arranged not only on the first surface 210A (for example, the display 201) of the housing 210, but also on the second surface 210B thereof. The electronic device 200 may further include a sensor module not illustrated, for example, at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or a luminance sensor.

The camera modules 205, 212, and 213 may include a first camera device 205 arranged on the first surface 210A of the electronic device 200, a second camera device 212 arranged on the second surface 210B thereof, and/or a flash 213. The camera devices 205 and 212 may include a single lens or a plurality of lenses, an image sensor, and/or an image signal processor. The flash 213 may include, for example, a light-emitting diode or a xenon lamp. In some embodiments, two or more lenses (an infrared camera, a wide-angle lens, and a telephoto lens) and image sensors may be arranged on a single surface of the electronic device 200.

The key input device 217 may be arranged on the side surface 210C of the housing 210. In another embodiment, the electronic device 200 may not include a part of the above-mentioned key input device 217 or the entire key input device 217, and the key input device 217 (not included) may be implemented in another type, such as a soft key, on the display 201. In some embodiments, the key input device may include a sensor module 216 arranged on the second surface 210B of the housing 210.

The indicator may be disposed, for example, on the first surface 210A of the housing 210. The indicator may provide, for example, the state information of the electronic device 200 in an optical form. In an embodiment, the light-emitting element may provide, for example, a light source that operates in conjunction with the operation of the camera module 205. The indicator may include, for example, an LED, an IR LED, and a xenon lamp.

The connector hole 208 may include a first connector hole 208 capable of accommodating a connector (e.g., a USB connector) configured to transmit/receive power and/or data to/from an external electronic device, and a second connector hole (e.g., an earphone jack) capable of accommodating a connector configured to transmit/receive an audio signal to/from an external electronic device.

Some camera modules 205 among the camera modules 205 and 212, some sensor modules 204 among the sensor modules 204 and 219, or an indicator may be disposed to be exposed through the display 201. For example, a camera module 205, a sensor module 204, or an indicator may be disposed in an inner space of the electronic device 200 so as to come into contact with an external environment through a through-hole penetrated from the display 201 to the front surface plate 202. In another embodiment, some sensor modules 204 may be disposed in the inner space of the electronic device so as to perform their functions without being visually exposed through the front surface plate 202. For example, in this case, the area of the display 201 facing the sensor module may not require a through-hole.

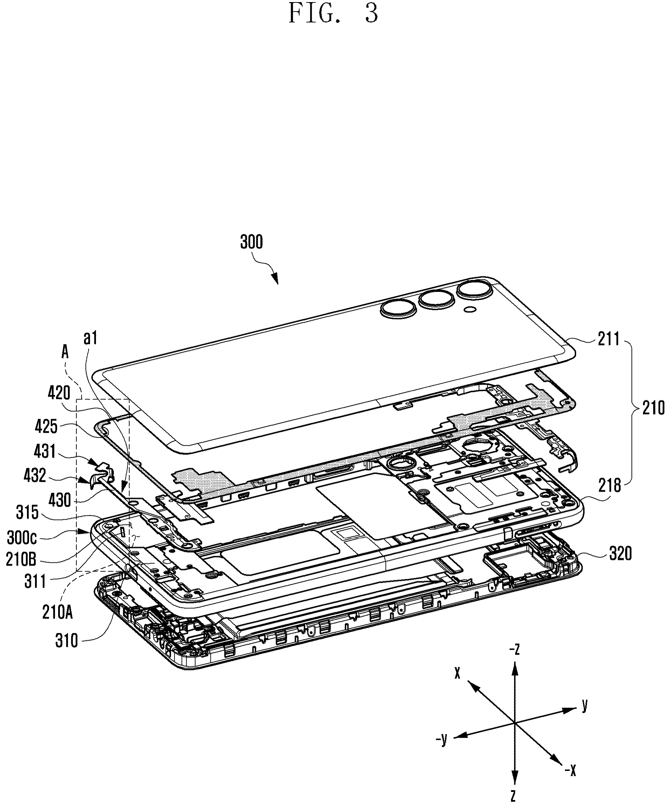

FIG. 3 is an exploded perspective view schematically illustrating a part of a configuration of an electronic device according to an embodiment of the disclosure.

According to an embodiment, the electronic device 300 of FIG. 3 may include embodiments illustrated in the electronic device 101 of FIG. 1 and the electronic device 200 of FIGS. 2A and/or 2B. According to various embodiments, the electronic device 300 of FIG. 3 may include embodiments that are at least partially similar to or different from the electronic device 101 of FIG. 1 and the electronic device 200 of FIGS. 2A and/or 2B. In the description of the electronic device 300 illustrated in FIG. 3, the same reference numerals are given to components that are substantially the same as those of the embodiments of the electronic device 101 of FIG. 1 and the electronic device 200 of FIGS. 2A and/or 2B, and duplicate descriptions may be omitted.

According to an embodiment, although an embodiment related to the electronic device 300 of FIG. 3 is described with respect to a bar-type electronic device, the disclosure is not limited thereto, and may be substantially equally applicable to electronic devices such as a foldable-type, rollable-type, sliding-type, wearable-type, tablet PC, or notebook PC.

Referring to FIG. 3, an electronic device 300 according to an embodiment of the disclosure may include a housing 210, a first support member 310, a second support member 320, a rear surface plate 211, an adhesive member 420, and/or a conductive pattern 430.

According to an embodiment, the housing 210 may include a front surface plate (e.g., the front surface plate 202 of FIG. 2A), the rear surface plate 211, and a side surface member 218 (e.g., a side surface bezel structure 218) surrounding a space between the front surface plate 202 and the rear surface plate 211. For example, the side surface member 218 may include the housing 210 or the side surface bezel structure 218 of FIGS. 2A and 2B. The side surface member 218 may form at least a portion of an exterior appearance of the electronic device 300. The side surface member 218 may form an exterior side wall of the electronic device 300. The side surface member 218 may include a non-conductive material (e.g., a polymer). According to an embodiment, the electronic device 300 may include the first support member 310. For example, the first support member 310 may be disposed across the inside of the side surface member 218. For example, the first support member 310 may be integrally formed with the side surface member 218. For example, the first support member 310 may be disposed inside the housing 210 and coupled to the side surface member 218. For example, the first support member 310 may be formed of a metal material and/or a non-metal material (e.g., a polymer).

According to an embodiment, the first support member 310 (e.g., a bracket or supporting structure) may include a first surface 210A (e.g., in the +z-axis direction) and a second surface 210B (e.g., in the -z-axis direction). A second support member 320 may be disposed on the first surface 210A (e.g., in the +z-axis direction). The rear surface plate 211 may be disposed on the second surface 210B (e.g., in the -z-axis direction). An adhesive member 420 and a conductive pattern 430 may be disposed between the first support member 310 (e.g., the second surface 210B) and the rear surface plate 211.

According to an embodiment, the first support member 310 may include at least one fastening hole 315 formed in a corner region. The first support member 310 may include at least one opening 311. For example, at least one opening 311 may be formed in a portion of the first support member 310. For example, the opening 311 may be formed adjacent to a corner 300c (e.g., between the +x-axis direction and the -y-axis direction) of the first support member 310 (e.g., the side surface member 218). For example, the opening 311 may be formed in the first support member 310 adjacent to the fastening hole 315. For example, the opening 311 may be formed such that a first portion 431 of the conductive pattern 430 is disposed on the second surface 210B of the first support member 310, and a second portion 432 of the conductive pattern 430 is disposed on the first surface 210A of the first support member 310.

According to an embodiment, the first support member 310 may include at least one fastening hole 315. The fastening hole 315 may be formed adjacent to a corner 300c (e.g., between the +x-axis direction and the -y-axis direction) of the first support member 310 (e.g., the side surface member 218). The fastening hole 315 may be formed between the opening 311 and the corner 300c of the first support member 310 (e.g., the side surface member 218). For example, the first support member 310 and the second support member 320 (or the front surface plate 202 illustrated in FIG. 2A) may be coupled to each other through a fastening member (e.g., a screw) inserted into the fastening hole 315. For example, the first support member 310 and the second support member 320 (or the front surface plate 202 illustrated in FIG. 2A) may be coupled to each other through a hook (not illustrated).

According to an embodiment, the first support member 310 and the side surface member 218 may include a non-conductive material (e.g., a polymer). For example, the first support member 310 and the side surface member 218 may be formed of a non-conductive material (e.g., a polymer).

According to an embodiment, the second support member 320 may be disposed on the first surface 210A (e.g., a +z-axis direction) of the first support member 310 (e.g., the side surface member 218). The second support member 320 may be coupled to the first support member 310 through a fastening member (e.g., a screw) inserted into the fastening hole 315 formed in the first support member 310. A display 201 and the front surface plate 202 illustrated in FIG. 2A may be disposed on one surface (e.g., a +z-axis direction) of the second support member 320.

According to an embodiment, the rear surface plate 211 may be disposed on the second surface 210B (e.g., in the -z-axis direction) of the first support member 310 (e.g., the side surface member 218). The rear surface plate 211 may be coupled to the first support member 310 through an adhesive member 420 (e.g., a double-sided adhesive tape). For example, the rear surface plate 211 may be coupled to an edge of the first support member 310 through the adhesive member 420.

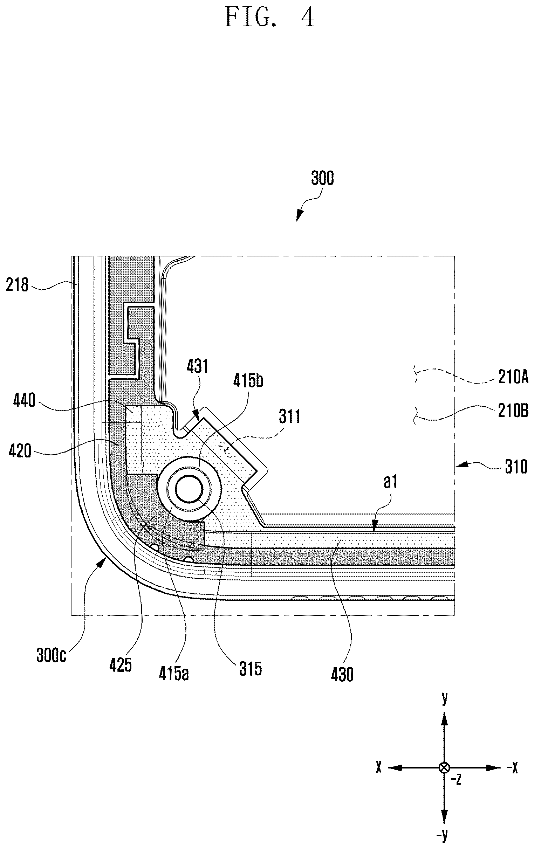

According to an embodiment, the adhesive member 420 (e.g., a double-sided adhesive tape) may couple the first support member 310 (e.g., the side surface member 218) and the rear surface plate 211. For example, the adhesive member 420 may adhesively bond the first support member 310 and the rear surface plate 211. The adhesive member 420 may be disposed between the first support member 310 and the rear surface plate 211. For example, the adhesive member 420 may be disposed in the form of a closed-loop along an edge of the first support member 310. For example, the adhesive member 420 may be disposed on an inner (e.g., the -z-axis direction) edge of the second surface 210B of the first support member 310 and an inner (e.g., the +z-axis direction) edge of the rear surface plate 211. The adhesive member 420 may partially surround the fastening hole 315. For example, the adhesive member 420 may be disposed in a first region of the second surface 210B of the first support member 310 (e.g., a first surrounding region 415a of the fastening hole 315). The adhesive member 420 may include an extension region 425 extending in a direction (e.g., between the +x-axis direction and the -y-axis direction) toward the first surrounding region (e.g., the first surrounding region 415a of FIG. 4) of the fastening hole 315. For example, the extension region 425 of the adhesive member 420 may be disposed between the fastening hole 315 and the corner 300c of the first support member 310 (e.g., the side surface member 218). Through the extension region 425 of the adhesive member 420, an adhesive force between the first support member 310 and the rear surface plate 211 may be strengthened.

According to an embodiment, the conductive pattern 430 (e.g., an antenna pattern or an antenna radiator) may be disposed between the first support member 310 and the rear surface plate 211. For example, the conductive pattern 430 may be disposed between the second surface 210B of the first support member 310 and the rear surface plate 211. For example, the conductive pattern 430 may be disposed at a lower portion (e.g., in the -y-axis direction) of the first support member 310. For example, the conductive pattern 430 may be disposed at a lower portion (e.g., in the -y-axis direction) of the side surface member 218.

According to an embodiment, the conductive pattern 430 (e.g., an antenna pattern or an antenna radiator) may be electrically connected to the wireless communication module 192 (e.g., an RFIC) illustrated in FIG. 1, and may operate as an antenna a1. For example, the conductive pattern 430 may be configured as a portion of the antenna a1. For example, the antenna a1 including the conductive pattern 430 may operate in a frequency band of a low band (e.g., about 600 MHz to 1200 MHz), a mid-band (e.g., about 1500 MHz to 2200 MHz), and/or a high band (e.g., about 2300 MHz to 2700 MHz). The frequency band of the antenna a1 including the conductive pattern 430 is not limited to the above examples, and may transmit and receive signals in other frequency bands.

According to an embodiment, the adhesive member 420 and the conductive pattern 430 may be disposed between the first support member 310 and the rear surface plate 211. For example, the conductive pattern 430 and the adhesive member 420 may be disposed between the second surface 210B of the first support member 310 and an inner surface (e.g., in the +z-axis direction) of the rear surface plate 211.

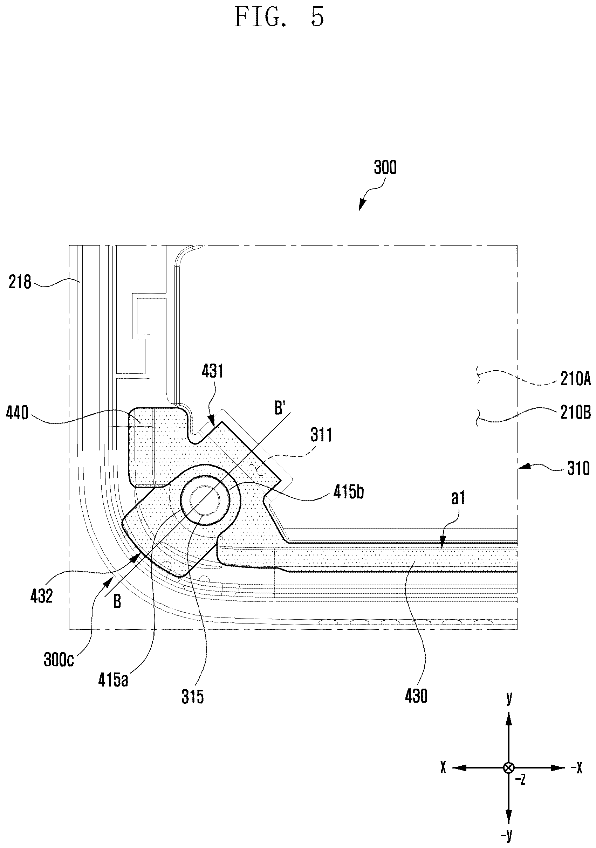

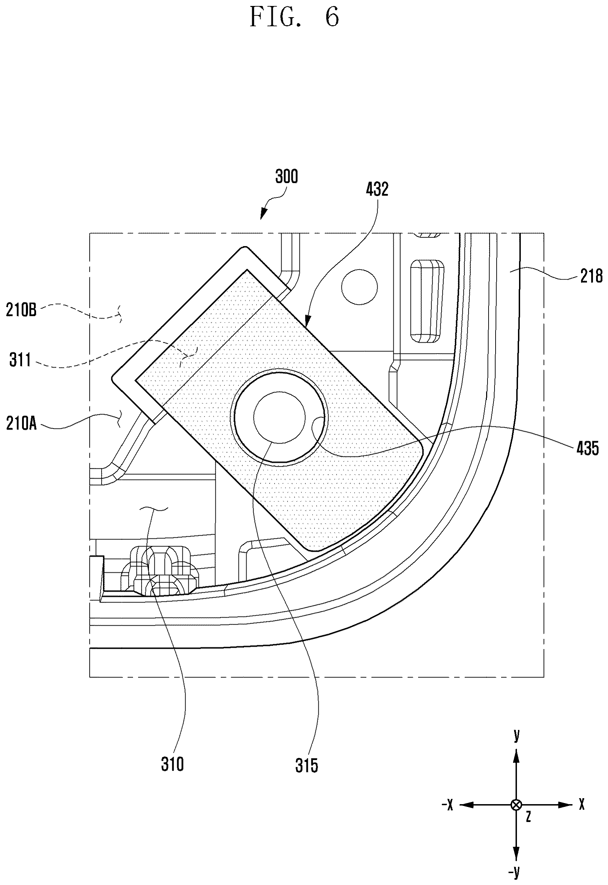

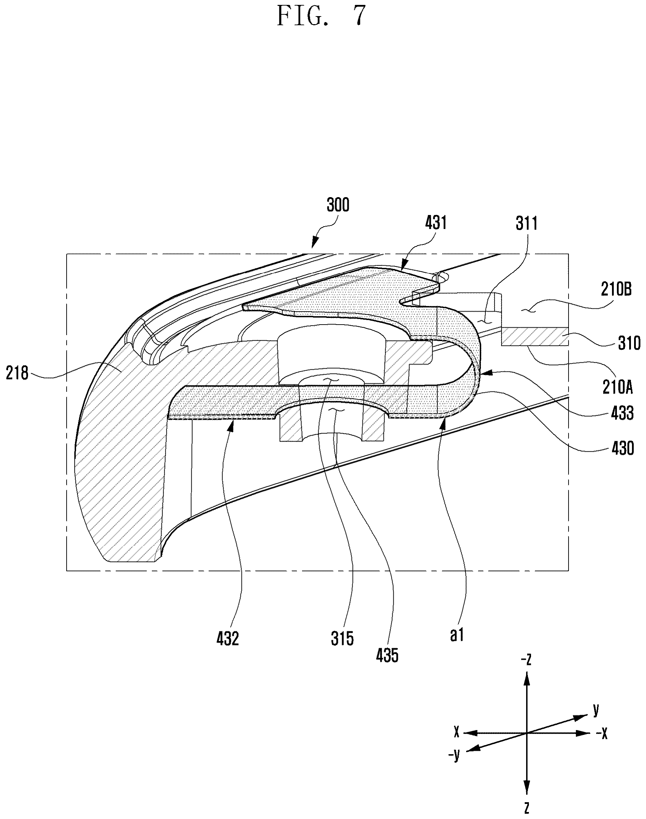

FIG. 4 is a view schematically illustrating a second surface in a state in which a portion A of the electronic device illustrated in FIG. 3 according to an embodiment of the disclosure is coupled. FIG. 5 is a view schematically illustrating a state in which an adhesive member is omitted, in the electronic device illustrated in FIG. 4 according to an embodiment of the disclosure. FIG. 6 is a view schematically illustrating a first surface in a state in which a portion A of the electronic device illustrated in FIG. 3 according to an embodiment of the disclosure is coupled. FIG. 7 is a cross-sectional view schematically illustrating a B-B' portion of the electronic device illustrated in FIG. 5 according to an embodiment of the disclosure.

Referring to FIGS. 4 to 7, the first support member 310 may include a fastening hole 315 and an opening 311 formed adjacent to a corner 300c (e.g., between the +x-axis direction and the -y-axis direction) of the side surface member 218. For example, the fastening hole 315 may be formed in the corner 300c region (e.g., between the +x-axis direction and the -y-axis direction) of the first support member 310. For example, the opening 311 may be formed adjacent to the fastening hole 315.

According to an embodiment, the fastening hole 315 may be formed to be closer to the corner 300c (e.g., a corner region) of the side surface member 218 (e.g., the first support member 310) than the opening 311.

According to an embodiment, the fastening hole 315 may include a first surrounding region 415a (e.g., a first region) and a second surrounding region 415b (e.g., a second region). For example, the first surrounding region 415a may be a first region of a portion surrounding the fastening hole 315 (e.g., between the +x-axis direction and the -y-axis direction). For example, the second surrounding region 415b may be a second region of a portion surrounding the fastening hole 315 (e.g., between the -x-axis direction and the +y-axis direction). For example, a portion of the adhesive member 420 may be disposed in the first surrounding region 415a (e.g., the first region) of the fastening hole 315. For example, a portion of the conductive pattern 430 (e.g., a first portion 431) may be disposed in the second surrounding region 415b (e.g., the second region) of the fastening hole 315. For example, a portion (e.g., the first portion 431) of the conductive pattern 430 may be formed in the first region (e.g., the first surrounding region 415a of the fastening hole 315) between the fastening hole 315 and the corner 300c of the side surface member 218, so as not to overlap with the adhesive member 420. According to an embodiment, the first surrounding region 415a (e.g., the first region) and the second surrounding region 415b (e.g., the second region) may substantially surround the fastening hole 315.

According to an embodiment, the adhesive member 420 may be disposed in the first surrounding region 415a (e.g., between the +x-axis direction and the -y-axis direction) of the fastening hole 315. For example, the adhesive member 420 may partially surround the fastening hole 315 and may be disposed in the first surrounding region 415a (e.g., the first region) of the second surface 210B of the first support member 310. For example, an extension region 425 of the adhesive member 420 may be disposed in the first surrounding region 415a of the fastening hole 315. For example, the adhesive member 420 (e.g., the extension region 425) may be disposed between the first surrounding region 415a of the fastening hole 315 and the corner 300c of the side surface member 218 (e.g., the first support member 310).

According to an embodiment, the opening 311 may be formed in the first support member 310 adjacent to the fastening hole 315. For example, the opening 311 may be formed adjacent to the second surrounding region 415b (e.g., between the -x-axis direction and the +y-axis direction) of the fastening hole 315. For example, the opening 311 may be formed to penetrate the second surface 210B (e.g., in the -z-axis direction) and the first surface 210A (e.g., in the +z-axis direction) of the first support member 310. For example, the opening 311 may be formed such that the first portion 431 of the conductive pattern 430 is disposed on the second surface 210B of the first support member 310, and the second portion 432 of the conductive pattern 430 is disposed on the first surface 210A of the first support member 310.

According to an embodiment, the conductive pattern 430 may be extended from the second surface 210B to the first surface 210A of the first support member 310 through the opening 311. For example, the conductive pattern 430 may be disposed such that the first portion 431 is disposed on the second surface 210B of the first support member 310 and the second portion 432 is disposed on the first surface 210A of the first support member 310 through the opening 311. The first portion 431 and the second portion 432 of the conductive pattern 430 may be integrally formed. The first portion 431 of the conductive pattern 430 may be disposed in the second surrounding region 415b (e.g., the second region) of the fastening hole 315. The first portion 431 of the conductive pattern 430 may be disposed on the second surface 210B of the first support member 310. The second portion 432 of the conductive pattern 430 may be extended from the first portion 431 and may be disposed on the first surface 210A of the first support member 310 through the opening 311. Referring to FIG. 6, the second portion 432 of the conductive pattern 430 disposed on the first surface 210A of the first support member 310 may surround a periphery of the fastening hole 315. For example, the second portion 432 of the conductive pattern 430 may include a hole 435 at a portion corresponding to the fastening hole 315. By overlapping the hole 435 formed in the second portion 432 of the conductive pattern 430 with the fastening hole 315, the second portion 432 of the conductive pattern 430 may surround the periphery of the fastening hole 315.

According to an embodiment, the conductive pattern 430 may include a third portion 433. For example, the first portion 431 of the conductive pattern 430 may be disposed on the second surface 210B of the first support member 310, the second portion 432 of the conductive pattern 430 may be disposed on the first surface 210A of the first support member 310, and the third portion 433 of the conductive pattern 430 may be disposed, at least in part, in the opening 311. The first portion 431, the second portion 432, and the third portion 433 of the conductive pattern 430 may be integrally formed. For example, when the first portion 431 of the conductive pattern 430 is disposed on the second surface 210B of the first support member 310, the second portion 432 of the conductive pattern 430 is disposed on the first surface 210A of the first support member 310 through the opening 311, and the third portion 433 is disposed to extend into the opening 311, an electrical length of the antenna a1 including the conductive pattern 430 may be extended, and radiation performance of the antenna a1 may be improved.

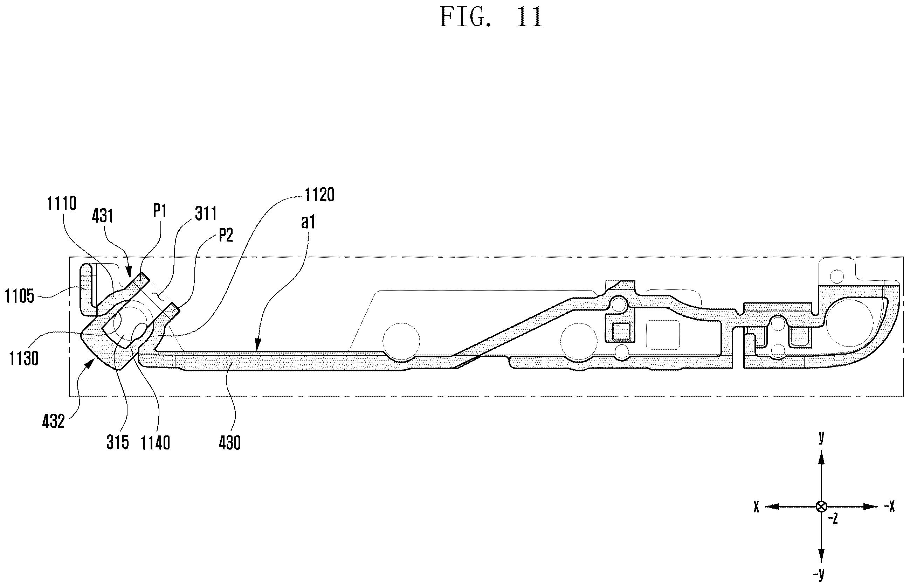

According to various embodiments, the first portion 431 of the conductive pattern 430 may include a conductive extension portion 440 (e.g., the first conductive extension portion 1105 of FIG. 11) extending in one direction (e.g., the +y-axis direction). When the first portion 431 of the conductive pattern 430 includes the conductive extension portion 440 extending in one direction (e.g., the +y-axis direction), the electrical length of the antenna a1 including the conductive pattern 430 may be extended, and radiation performance of the antenna a1 may be improved.

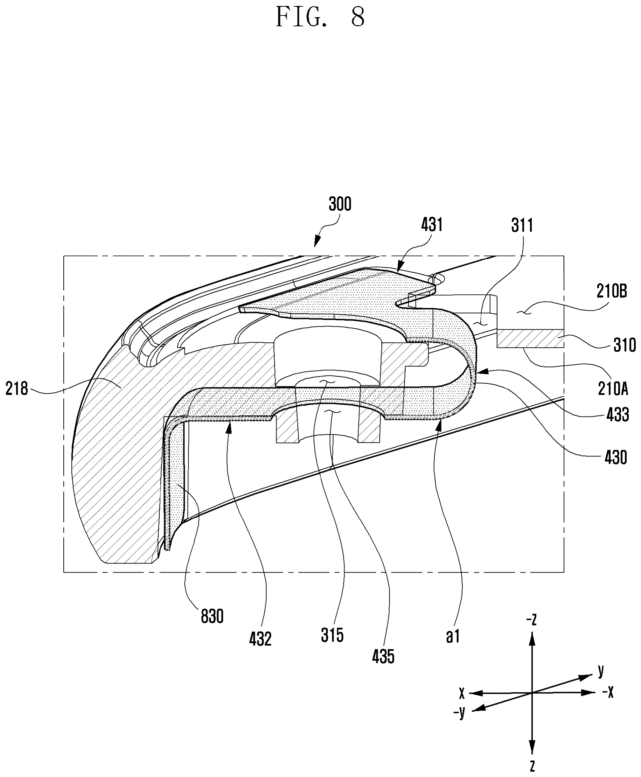

FIG. 8 is a cross-sectional view of the electronic device illustrated in FIG. 5 according to an embodiment of the disclosure, taken along line B-B', schematically illustrating various embodiments of the conductive pattern.

Referring to FIG. 8, the first support member 310 may include an opening 311 penetrating the second surface 210B (e.g., in the -z-axis direction) and the first surface 210A (e.g., in the +z-axis direction). The first portion 431 of the conductive pattern 430 may be disposed on the second surface 210B of the first support member 310. The second portion 432 of the conductive pattern 430 may integrally extend from the first portion 431 through the third portion 433, and may be disposed on the first surface 210A of the first support member 310 through the opening 311.

According to various embodiments, the conductive pattern 430 may further include an extension portion 830. For example, the second portion 432 of the conductive pattern 430 extending on the first surface 210A of the first support member 310 may include the extension portion 830 extending along an inner surface (e.g., in the +z-axis direction) of the side surface member 218. For example, the extension portion 830 connected to the second portion 432 of the conductive pattern 430 may be extended in one direction (e.g., the +z-axis direction) on the inner surface of the side surface member 218.

According to various embodiments, when the conductive pattern 430 includes the extension portion 830 extending from the second portion 432, the electrical length of the antenna a1 including the conductive pattern 430 may be extended, and the radiation performance of the antenna a1 may be improved.

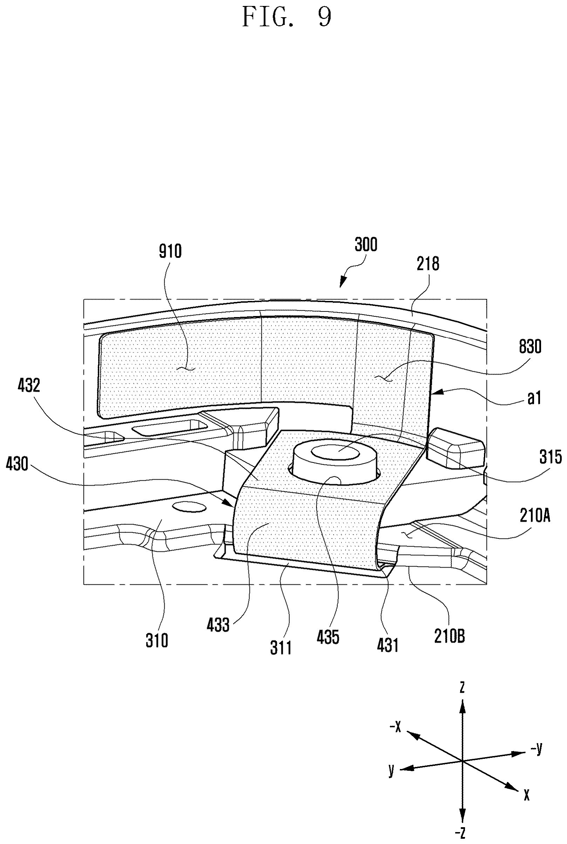

FIG. 9 is a view schematically illustrating an embodiment in which a conductive pattern of an electronic device includes a first extension portion, according to an embodiment of the disclosure.

Referring to FIG. 9, the first portion 431 of the conductive pattern 430 may be disposed on the second surface 210B of the first support member 310. The second portion 432 of the conductive pattern 430 may integrally extend from the first portion 431 through the third portion 433, and may be disposed on the first surface 210A of the first support member 310 through the opening 411. For example, the second portion 432 of the conductive pattern 430 may be disposed so as to surround the periphery of the fastening hole 315.

According to an embodiment, the second portion 432 of the conductive pattern 430 may include an extension portion 830 extending along an inner surface (e.g., in the +z-axis direction) of the side surface member 218. For example, the extension portion 830 connected to the second portion 432 of the conductive pattern 430 may be extended in one direction (e.g., the +z-axis direction) on the inner surface of the side surface member 218.

According to an embodiment, the conductive pattern 430 disposed on the first surface 210A of the first support member 310 may include a first extension portion 910 extending in a first direction (e.g., the +y-axis direction) from the extension portion 830 on the inner surface of the side surface member 218.

According to an embodiment, when the conductive pattern 430 includes the extension portion 830 extending from the second portion 432 and the first extension portion 910, the electrical length of the antenna a1 including the conductive pattern 430 may be extended, and the radiation performance of the antenna a1 may be improved.

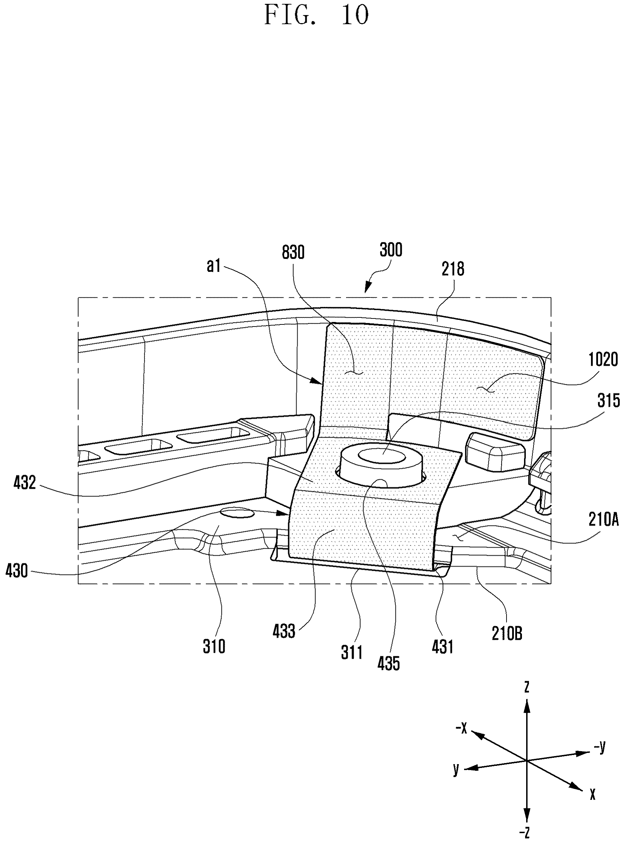

FIG. 10 is a view schematically illustrating an embodiment in which a conductive pattern of an electronic device includes a second extension portion, according to an embodiment of the disclosure.

Referring to FIG. 10, the first portion 431 of the conductive pattern 430 may be disposed on the second surface 210B of the first support member 310. The second portion 432 of the conductive pattern 430 may integrally extend from the first portion 431 through the third portion 433, and may be disposed on the first surface 210A of the first support member 310 through the opening 311. For example, the second portion 432 of the conductive pattern 430 may be disposed so as to surround the periphery of the fastening hole 315.

According to an embodiment, the second portion 432 of the conductive pattern 430 may include an extension portion 830 extending along an inner surface (e.g., in the +z-axis direction) of the side surface member 218. For example, the extension portion 830 connected to the second portion 432 of the conductive pattern 430 may be extended in one direction (e.g., the +z-axis direction) on the inner surface of the side surface member 218.

According to an embodiment, the conductive pattern 430 disposed on the first surface 210A of the first support member 310 may include a second extension portion 1020 extending in a second direction (e.g., the x-axis direction) from the extension portion 830 on the inner surface of the side surface member 218.

According to an embodiment, when the conductive pattern 430 includes the extension portion 830 extending from the second portion 432 and the second extension portion 1020, the electrical length of the antenna a1 including the conductive pattern 430 may be extended, and the radiation performance of the antenna a1 may be improved.

According to various embodiments, the conductive pattern 430 may include, at the extension portion 830 extending from the second portion 432, a first extension portion 910 extending in the first direction on the inner surface of the side surface member 218 and a second extension portion 1020 extending in the second direction, thereby extending the electrical length of the antenna a1 including the conductive pattern 430.

FIG. 11 is a view schematically illustrating a conductive pattern including a first conductive extension portion of an electronic device according to an embodiment of the disclosure.

According to an embodiment, the conductive pattern 430 may include a first portion 431 and a second portion 432. For example, the first portion 431 of the conductive pattern 430 may be disposed on the second surface 210B of the first support member 310. The second portion 432 of the conductive pattern 430 may integrally extend from the first portion 431 and may be disposed on the first surface 210A of the first support member 310 through the opening 311.

According to various embodiments, the first portion 431 of the conductive pattern 430 may include a (1-1)^{th} portion 1110 and a (1-2)^{th} portion 1120. The (1-1)^{th} portion 1110 and the (1-2)^{th} portion 1120 may be spaced apart from each other. The second portion 432 of the conductive pattern 430 may include a (2-1)^{th} portion 1130 and a (2-2)^{th} portion 1140. For example, the (1-1)^{th} portion 1110 of the first portion 431 may be connected to the (2-1)^{th} portion 1130 of the second portion 432 through the opening 311, and the (1-2)^{th} portion 1120 may be connected to the (2-2)^{th} portion 1140 of the second portion 432 through the opening 311. The second portion 432 may be integrally connected such that the (2-1)^{th} portion 1130 connected to the (1-1)^{th} portion 1110 of the first portion 431 and the (2-2)^{th} portion 1140 connected to the (1-2)^{th} portion 1120 of the first portion 431 surround at least a portion of the fastening hole 315.

According to an embodiment, the first portion 431 of the conductive pattern 430 may include a first conductive extension portion 1105 extending in one direction (e.g., the +y-axis direction). The first portion 431 of the conductive pattern 430 may have a first point P1 of the (1-1)^{th} portion 1110 and a second point P2 of the (1-2)^{th} portion 1120 spaced apart from each other. For example, the first point P1 may be positioned on the (1-1)^{th} portion 1110. The second point P2 may be positioned on the (1-2)^{th} portion 1120.

According to an embodiment, when the first portion 431 (e.g., the (1-1)^{th} portion 1110) of the conductive pattern 430 includes the first conductive extension portion 1105 extending in one direction (e.g., the +y-axis direction), the electrical length of the antenna a1 including the conductive pattern 430 may be extended, and the radiation performance of the antenna a1 may be improved.

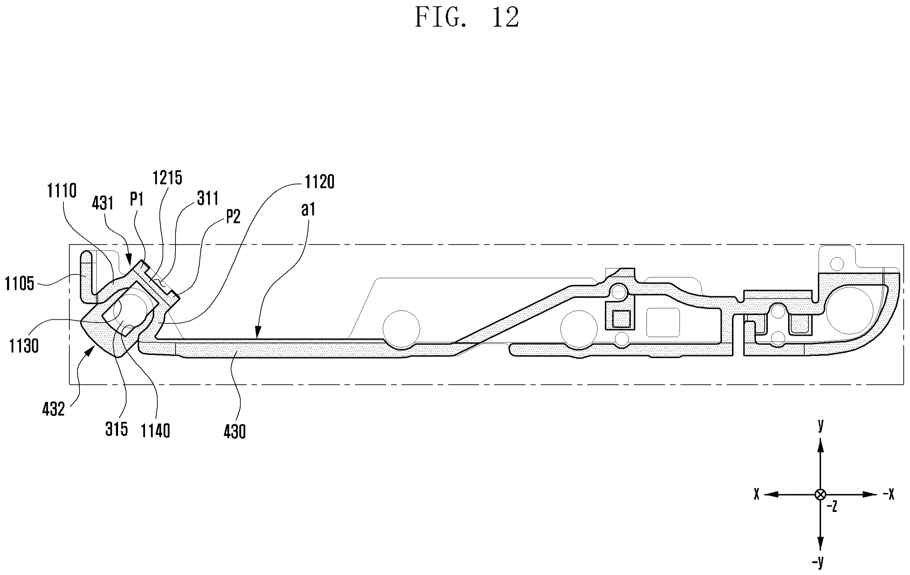

FIG. 12 is a view schematically illustrating a conductive pattern including a first conductive extension portion and a second conductive extension portion of an electronic device according to an embodiment of the disclosure.

According to an embodiment, the conductive pattern 430 may include a first portion 431 and a second portion 432. For example, the first portion 431 of the conductive pattern 430 may be disposed on the second surface 210B of the first support member 310. The second portion 432 of the conductive pattern 430 may integrally extend from the first portion 431 and may be disposed on the first surface 210A of the first support member 310 through the opening 311.

According to various embodiments, the first portion 431 of the conductive pattern 430 may include a (1-1)^{th} portion 1110 and a (1-2)^{th} portion 1120. The second portion 432 of the conductive pattern 430 may include a (2-1)^{th} portion 1130 and a (2-2)^{th} portion 1140. For example, the (1-1)^{th} portion 1110 of the first portion 431 may be connected to the (2-1)^{th} portion 1130 of the second portion 432 through the opening 311, and the (1-2)^{th} portion 1120 may be connected to the (2-2)^{th} portion 1140 of the second portion 432 through the opening 311. The second portion 432 may be integrally connected such that the (2-1)^{th} portion 1130 connected to the (1-1)^{th} portion 1110 of the first portion 431 and the (2-2)^{th} portion 1140 connected to the (1-2)^{th} portion 1120 of the first portion 431 surround at least a portion of the fastening hole 315.

According to an embodiment, the first portion 431 of the conductive pattern 430 may include a first conductive extension portion 1105 extending in one direction (e.g., the +y-axis direction). A first point P1 of the (1-1)^{th} portion 1110 and a second point P2 of the (1-2)^{th} portion 1120 of the conductive pattern 430 may be connected through a second conductive extension portion 1215.

According to an embodiment, when the first portion 431 (e.g., the (1-1)^{th} portion 1110) of the conductive pattern 430 includes the first conductive extension portion 1105 extending in one direction (e.g., the +y-axis direction) and the second conductive extension portion 1215 electrically connecting the first point P1 and the second point P2, the electrical length of the antenna a1 including the conductive pattern 430 may be extended, and the radiation performance of the antenna a1 may be improved.

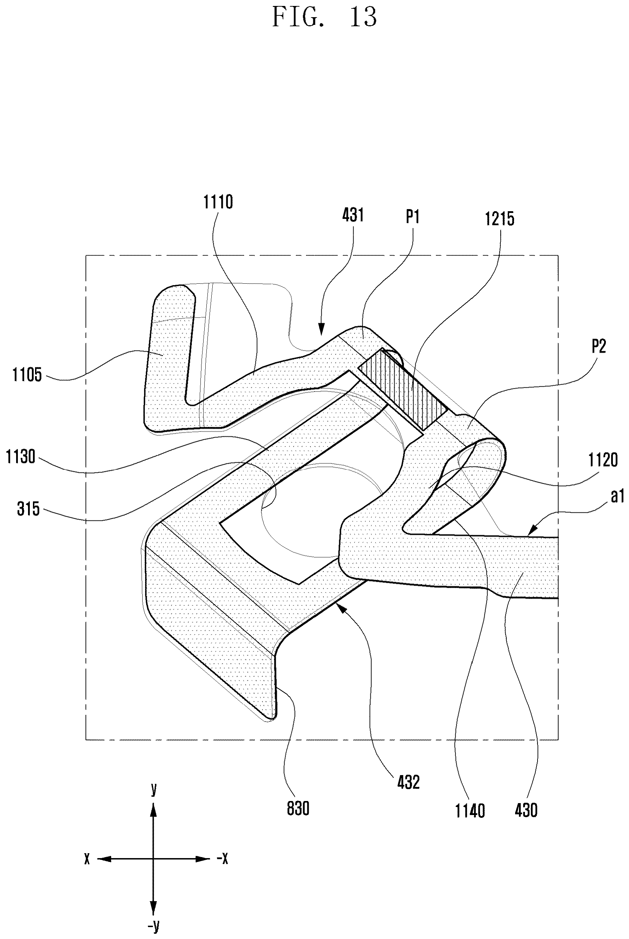

FIG. 13 is a view schematically illustrating various embodiments of a conductive pattern of an electronic device according to an embodiment of the disclosure.

According to an embodiment, the conductive pattern 430 may include a first portion 431 and a second portion 432. For example, the first portion 431 of the conductive pattern 430 may be disposed on the second surface 210B of the first support member 310. The second portion 432 of the conductive pattern 430 may integrally extend from the first portion 431 and may be disposed on the first surface 210A of the support member 410 through the opening 311.

According to various embodiments, the first portion 431 of the conductive pattern 430 may include a (1-1)^{th} portion 1110 and a (1-2)^{th} portion 1120. The second portion 432 of the conductive pattern 430 may include a (2-1)^{th} portion 1130 and a (2-2)^{th} portion 1140. For example, the (1-1)^{th} portion 1110 of the first portion 431 may be connected to the (2-1)^{th} portion 1130 of the second portion 432 through the opening 311, and the (1-2)^{th} portion 1120 may be connected to the (2-2)^{th} portion 1140 of the second portion 432 through the opening 311. The second portion 432 may be integrally connected such that the (2-1)^{th} portion 1130 connected to the (1-1)^{th} portion 1110 of the first portion 431 and the (2-2)^{th} portion 1140 connected to the (1-2)^{th} portion 1120 of the first portion 431 surround at least a portion of the fastening hole 315.

According to an embodiment, the first portion 431 of the conductive pattern 430 may include a first conductive extension portion 1105 extending in one direction (e.g., the +y-axis direction). A first point P1 of the (1-1)^{th} portion 1110 and a second point P2 of the (1-2)^{th} portion 1120 of the conductive pattern 430 may be connected through a second conductive extension portion 1215.

According to an embodiment, the second portion 432 of the conductive pattern 430 may include an integral extension portion 930. For example, the second portion 432, which is extended from the first portion 431 of the conductive pattern 430 and disposed on the first surface 210A of the first support member 310, may include the extension portion 830 extending along an inner surface of the side surface member 218. For example, the extension portion 830 connected to the second portion 432 of the conductive pattern 430 may be extended in one direction (e.g., the +z-axis direction) on the inner surface of the side surface member 218. According to an embodiment, when the first portion 431 of the conductive pattern 430 includes the first conductive extension portion 1105, the second conductive extension portion 1215, and the extension portion 830 extending from the second portion 432, the electrical length of the antenna a1 including the conductive pattern 430 may be extended, and the radiation performance of the antenna a1 may be improved.

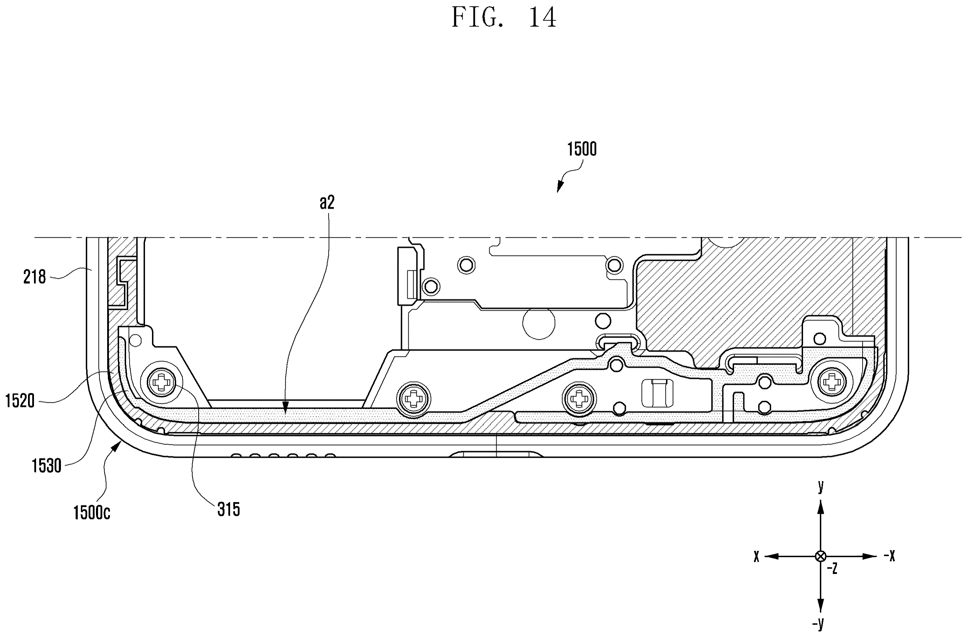

FIG. 14 is a view schematically illustrating a part of a configuration of an electronic device according to a first comparative example including an adhesive member and a conductive pattern.

Referring to FIG. 14, the electronic device 1500 according to the first comparative example may include an adhesive member 1520 and a conductive pattern 1530 disposed between the fastening hole 315 and a corner 1500C (e.g., between the +x-axis direction and the -y-axis direction) of the side surface member 218.

According to the embodiment, the conductive pattern 1530 of the electronic device 1500 according to the first comparative example may be electrically connected to the wireless communication module 192 (e.g., an RFIC) illustrated in FIG. 1, and may operate as an antenna a2.

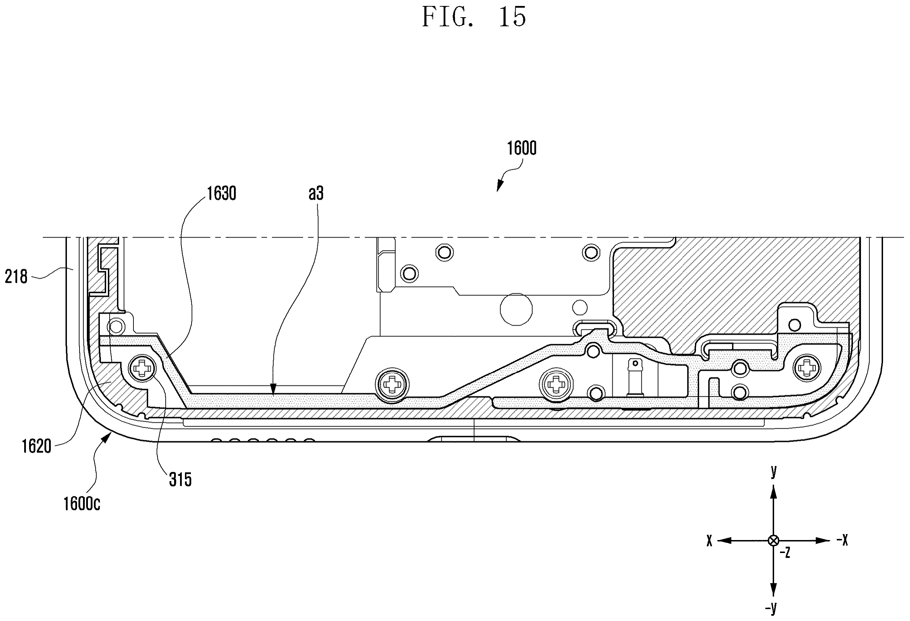

FIG. 15 is a view schematically illustrating a part of a configuration of an electronic device according to a second comparative example including an adhesive member and a conductive pattern.

Referring to FIG. 15, the electronic device 1600 according to the second comparative example may include an adhesive member 1520 disposed between a fastening hole 315 and a corner 1600C (e.g., between the +x-axis direction and the -y-axis direction) of a side surface member 218, and a conductive pattern 1630 disposed adjacent to a second surrounding region of the fastening hole 315 (e.g., the second surrounding region 415b of FIG. 4 between the -x-axis direction and the +y-axis direction).

According to an embodiment, the conductive pattern 1630 of the electronic device 1600 according to the second comparative example may be electrically connected to the wireless communication module 192 (e.g., an RFIC) illustrated in FIG. 1, and may operate as an antenna a3.

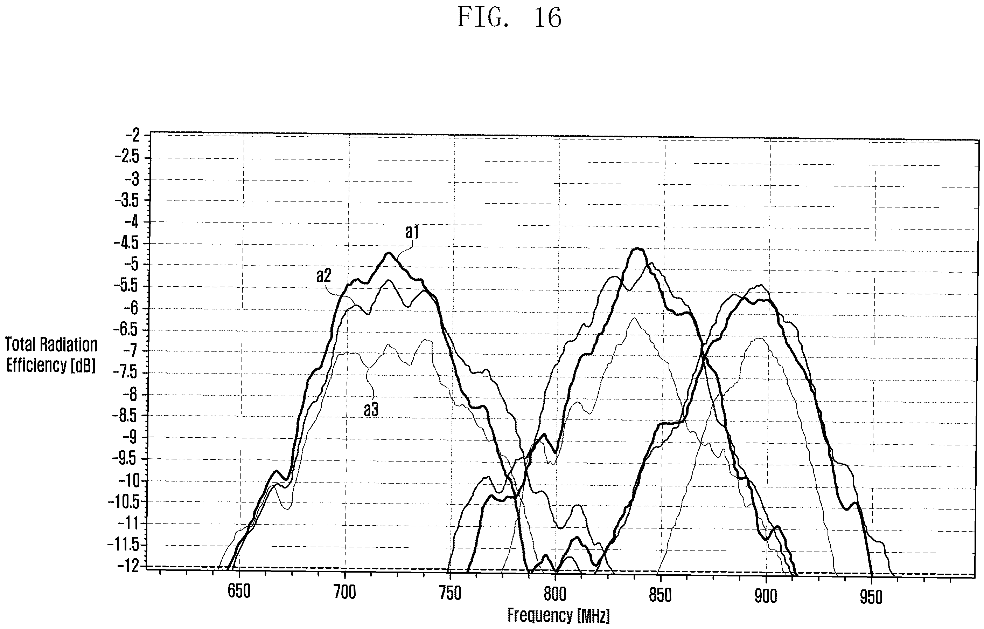

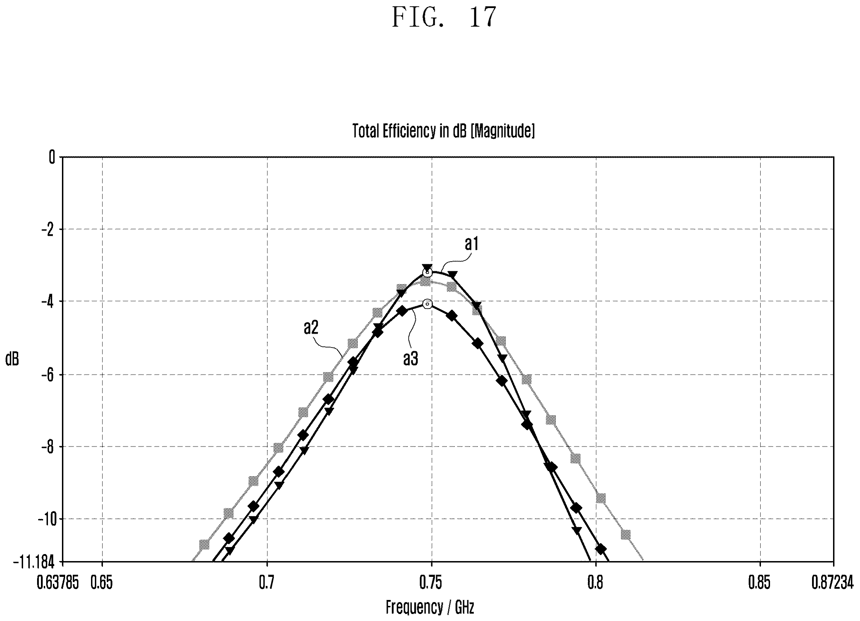

FIG. 16 is a view schematically illustrating radiation performance of the electronic device according to the embodiment of the disclosure, radiation performance of an electronic device according to the first comparative example, and radiation performance of an electronic device according to the second comparative example. FIG. 17 is a view schematically illustrating antenna gain of an electronic device according to the embodiment of the disclosure, antenna gain of the electronic device according to the first comparative example, and antenna gain of the electronic device according to the second comparative example.

According to the embodiment, for example, as illustrated in FIG. 7, the electronic device 300 according to the embodiment of the disclosure may be configured such that the first portion 431 of the conductive pattern 430 is disposed on the second surface 210B of the first support member 310, and the second portion 432 of the conductive pattern 430 is disposed on the first surface 210A of the first support member 310 through the opening 311. For example, the electronic device 300 according to the embodiment of the disclosure may be in a state in which the electrical length of an antenna a1 including the conductive pattern 430 is extended.

According to various embodiments, for example, as illustrated in FIG. 14, the electronic device 1500 according to the first comparative example may be configured such that the adhesive member 1520 and the conductive pattern 1530 are disposed between the fastening hole 315 and the corner 1500C of the side surface member 218. For example, the electronic device 1500 according to the first comparative example may have an antenna a2 including the conductive pattern 1530, in which a width of the antenna a2 is narrow and an electrical length thereof is limited.

According to various embodiments, for example, as illustrated in FIG. 15, the electronic device 1600 according to the second comparative example may be configured such that the adhesive member 1520 is disposed between the fastening hole 315 and the corner 1600C of the side surface member 218, and the conductive pattern 1630 is disposed adjacent to the surrounding region of the fastening hole 315 (e.g., the second surrounding region 415b of FIG. 4). For example, the antenna a3 including the conductive pattern 1630 of the electronic device 1600 according to the second comparative example may be disposed in an inner direction of the side surface member 218 compared to the antenna a2 including the conductive pattern 1530 of the electronic device 1500 according to the first comparative example.

Referring to FIG. 16, it can be identified that, compared to the radiation performance of the antenna a3 of the electronic device 1600 according to the second comparative example, the radiation performance of the antenna a1 of the electronic device 300 according to the embodiment of the disclosure is improved in frequency bands of about 660 MHz to about 730 MHz and about 830 MHz to about 840 MHz. For example, it can be identified that the radiation performance of the antenna a2 of the electronic device 1500 according to the first comparative example and the radiation performance of the antenna a1 of the electronic device 300 according to the embodiment of the disclosure are substantially identical in a frequency band of about 830 MHz to about 950 MHz.

Referring to FIG. 17, it can be identified that, compared to the gain of the antenna a3 of the electronic device 1600 according to the second comparative example, the gain of the antenna a1 of the electronic device 300 according to the embodiment of the disclosure is improved in a frequency band of about 740 MHz to about 760 MHz. For example, it can be identified that the gain of the antenna a1 of the electronic device 300 according to the embodiment of the disclosure is substantially identical to or improved over the gain of the antenna a2 of the electronic device 1500 according to the first comparative example in a frequency band of about 740 MHz to about 760 MHz.

According to various embodiments, as illustrated in Table 1 below, performance related to total radiated power (TRP) of the antenna a1 of the electronic device 300 according to the embodiment of the disclosure is improved, for example, in frequency bands of LTE B5, LTE B8, and LTE B28, compared to total radiated power of the antenna a3 of the electronic device 1600 according to the second comparative example, and is substantially identical to or improved over total radiated power of the antenna a2 of the electronic device 1500 according to the first comparative example.

**[Table 1]**

| Specification | LTE B5 | | | LTE B8 | | | LTE B28 | | |
|---|---|---|---|---|---|---|---|---|---|
| | 20450 | 20525 | 20600 | 21500 | 21625 | 21750 | 27260 | 27435 | 27610 |
| First comparative example | 18.38 | 18.22 | 17.74 | 18.02 | 18.31 | 17.64 | 17.26 | 17.61 | 17.42 |
| Second comparative example | 17.42 | 17.15 | 16.21 | 16.54 | 17.06 | 16.53 | 16.09 | 16.66 | 16.64 |
| The disclosure | 18.03 | 18.63 | 17.65 | 17.95 | 18.03 | 17.48 | 17.89 | 18.07 | 17.32 |

According to an embodiment of the disclosure, an electronic device 101, 200, or 300 may include a housing 210 including a front surface plate 202, a rear surface plate 211, and a side surface member 218 forming an outer side wall (e.g., a side surface) of the electronic device. According to an embodiment, the electronic device 101, 200, or 300 may include a first support member 310 that is integrally formed with the side surface member 218 and includes a first surface 210A and a second surface 210B. According to an embodiment, the first support member 310 may include a fastening hole 315 formed in a corner region. According to an embodiment, the first support member 310 may include an opening 311 formed adjacent to the fastening hole 315. According to an embodiment, the electronic device 101, 200, or 300 may include an adhesive member 420 that is disposed in a first region of the second surface 210B of the first support member 310 and partially surrounds the fastening hole 315. According to an embodiment, the electronic device 101, 200, or 300 may include a conductive pattern 430 that extends from the second surface 210B of the first support member 310 to the first surface 210A of the first support member 310 through the opening 311. According to an embodiment, a portion of the conductive pattern 430 may be disposed in a second region of the second surface 210B of the first support member 310 so as to partially surround the fastening hole 315. According to an embodiment, the conductive pattern 430 may be formed so as not to overlap with the adhesive member 420 in the first region between the fastening hole 315 and a corner of the side surface member 218.

According to an embodiment, the first region in which a portion of the adhesive member 420 is disposed and the second region in which a portion of the conductive pattern 430 is disposed may be configured to substantially surround the fastening hole 315.

According to an embodiment, the adhesive member 420 may be configured to adhesively attach the rear surface plate 211 to the first support member 310.

According to an embodiment, the conductive pattern 430 may be configured as a portion of an antenna a1.

According to an embodiment, the conductive pattern 430 disposed on the first surface 210A of the first support member 310 may include an extension portion 830 extending along an inner surface of the side surface member 218.

According to an embodiment, the conductive pattern 430 disposed on the first surface 210A of the first support member 310 may include a first extension portion 910 extending, from the extension portion 830, in a first direction along the inner surface of the side surface member 218.

According to an embodiment, the conductive pattern 430 disposed on the first surface 210A of the first support member 310 may include a second extension portion 1020 extending, from the extension portion 830, in a second direction along the inner surface of the side surface member 218.

According to an embodiment, the adhesive member 420 and the conductive pattern 430 may be disposed between the first support member 310 and the rear surface plate 211.

According to an embodiment, the fastening hole 315 may be formed between the opening 311 and a corner of the side surface member 218.

According to an embodiment, the fastening hole 315 may be disposed closer to the corner of the side surface member 218 than the opening 311.

According to an embodiment, the first support member 310 and the side surface member 218 may include a non-conductive material.

According to an embodiment, the adhesive member 420 may further include an extension region 425 disposed between the fastening hole 315 and the corner of the side surface member 218.

According to an embodiment, the conductive pattern 430 may include a first portion 431 and a second portion 432, the first portion 431 being disposed on the second surface 210B of the first support member 310, and the second portion 432 being disposed on the first surface 210A of the first support member 310.

According to an embodiment, the first portion 431 of the conductive pattern 430 may be configured such that a first point P1 and a second point P2 of the first portion 431 are spaced apart from each other.

According to an embodiment, the first portion 431 of the conductive pattern 430 may include a first conductive extension portion 1105 extending in one direction.

According to an embodiment, the first portion 431 of the conductive pattern 430 may be configured such that a first point P1 and a second point P2 are connected to each other through a second conductive extension portion 1215.

According to an embodiment, the conductive pattern 430 may further include a third portion 433 that is integrally connected with the first portion 431 and the second portion 432 and is disposed, at least in part, the opening 311.

According to an embodiment, the first portion 431 of the conductive pattern 430 may include a (1-1)^{th} portion 1110 in which the first point P1 is located and a (1-2)^{th} portion 1120 in which the second point P2 is located.

According to an embodiment, the second portion 432 of the conductive pattern 430 may include a (2-1)^{th} portion 1130 connected to the (1-1)^{th} portion 1110 through the opening 311 and a (2-2)^{th} portion 1140 connected to the (1-2)^{th} portion 1120 through the opening 311.

According to an embodiment, the electronic device may further include a second support member 320 disposed on the first surface 210A of the first support member 310.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it denotes that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

In the foregoing, the disclosure has been described with reference to various embodiments of the disclosure, but it is evident that changes and modifications made by a person ordinarily skilled in the art to which the disclosure belongs without departing from the technical spirit of the disclosure fall within the scope of the disclosure.

## Claims

1. An electronic device (101, 200, 300) comprising:
a housing (210) including a front surface plate (202), a rear surface plate (211), and a side surface member (218) forming an outer side wall of the electronic device;
a first support member (310) that is integrally formed with the side surface member (218) and includes a first surface (210A) and a second surface (210B), the first support member (310) having a fastening hole (315) formed in a corner region thereof and an opening (311) formed adjacent to the fastening hole (315);
an adhesive member (420) disposed in a first region of the second surface (210B) of the first support member (310) and partially surrounding the fastening hole (315); and
a conductive pattern (430) extending from the second surface (210B) of the first support member (310) to the first surface (210A) of the first support member (310) through the opening (311),
wherein a portion of the conductive pattern (430) is disposed in a second region of the second surface (210B) of the first support member (310) so as to partially surround the fastening hole (315), and
wherein the conductive pattern (430) is formed so as not to overlap with the adhesive member (420) in the first region between the fastening hole (315) and a corner of the side surface member (218).

2. The electronic device of claim 1, wherein the first region in which a portion of the adhesive member (420) is disposed and the second region in which a portion of the conductive pattern (430) is disposed are configured to substantially surround the fastening hole (315).

3. The electronic device of claim 1 or 2, wherein the adhesive member (420) is configured to adhesively attach the rear surface plate (211) to the first support member (310).

4. The electronic device of any one of claims 1 to 3, wherein the conductive pattern (430) is configured as a portion of an antenna (a1).

5. The electronic device of any one of claims 1 to 4, wherein the conductive pattern (430) disposed on the first surface (210A) of the first support member (310) includes an extension portion (830) extending along an inner surface of the side surface member (218).

6. The electronic device of claim 5, wherein the conductive pattern (430) disposed on the first surface (210A) of the first support member (310) includes a first extension portion (910) extending in a first direction along an inner surface of the side surface member (218) from the extension portion (830).

7. The electronic device of claim 5 or 6, wherein the conductive pattern (430) disposed on the first surface (210A) of the first support member (310) includes a second extension portion (1020) extending in a second direction along the inner surface of the side surface member (218) from the extension portion (830).

8. The electronic device of any one of claims 1 to 7, wherein the adhesive member (420) and the conductive pattern (430) are disposed between the first support member (310) and the rear surface plate (211).

9. The electronic device of any one of claims 1 to 8, wherein the fastening hole (315) is formed between the opening (311) and a corner of the side surface member (218) and is disposed closer to the corner of the side surface member (218) than the opening (311).

10. The electronic device of any one of claims 1 to 9, wherein the first support member (310) and the side surface member (218) comprise a non-conductive material.

11. The electronic device of any one of claims 1 to 10, further comprising:
an extension region (425) of the adhesive member (420) disposed between the fastening hole (315) and the corner of the side surface member (218).

12. The electronic device of any one of claims 1 to 11, wherein the conductive pattern (430) includes a first portion (431) and a second portion (432),
wherein the first portion (431) is disposed on the second surface (210B) of the first support member (310) and is configured such that a first point (P1) and a second point (P2) of the first portion (431) are spaced apart from each other,
wherein the second portion (432) is disposed on the first surface (210A) of the first support member (310), and
wherein the first portion (431) includes a first conductive extension portion (1105) extending in one direction.

13. The electronic device of claim 12, wherein the first portion (431) is configured such that the first point (P1) and the second point (P2) are connected to each other through a second conductive extension portion (1215).

14. The electronic device of claim 12 or 13, wherein the conductive pattern (430) further includes a third portion (433) that is integrally connected with the first portion (431) and the second portion (432) and is disposed, at least in part, in the opening (311),
wherein the first portion (431) includes a (1-1)^{th} portion (1110) in which the first point (P1) is located and a (1-2)^{th} portion (1120) in which the second point (P2) is located, and
wherein the second portion (432) includes a (2-1)^{th} portion (1130) connected to the (1-1)^{th} portion (1110) through the opening (311) and a (2-2)^{th} portion (1140) connected to the (1-2)^{th} portion (1120) through the opening (311).

15. The electronic device of any one of claims 1 to 14, further comprising:
a second support member (320) disposed on the first surface (210A) of the first support member (310).
